# EUROPÄISCHE PATENTANMELDUNG

(11) **EP 0 749 944 A1**
(43) Veröffentlichungstag der Anmeldung: **27.12.1996**
(21) Anmeldenummer: 96109725.0
(22) Anmeldetag: 18.06.1996
(51) Int. Cl.: C04B 11/28, C04B 28/08

(54) **Bindemittel für Mörtel und Betone**

(30) Priorität: 22.06.1995 DE 19522376; 30.03.1996 DE 19612861
(71) Anmelder: SICOWA Verfahrenstechnik für Baustoffe GmbH & Co. KG, D-52072 Aachen (DE); ProMineral Gesellschaft zur Verwendung von Mineralstoffen mbH, 50129 Bergheim (DE)
(72) Erfinder: Jäger, Reinhard, Dr., 52062 Aachen (DE); Koslowski, Thomas, Dr., 52072 Aachen (DE)
(74) Vertreter: Sparing - Röhl - Henseler Patentanwälte

(57) **Zusammenfassung**

Die Erfindung betrifft ein Bindemittel für Mörtel und Betone, aus einer pulverförmigen Mischung von 20 bis 40 Massenteile Calciumsulfat-Alphahalbhydrat, 80 bis 60 Massenteile Hüttensandmehl, 0,35 bis 3,5 Massenteile Tonerdezement und 0,2 bis 2 Massenteile Kalkhydrat, wobei der Quotient der enthaltenen Massenteile von Tonerdezement und Kalkhydrat zu Hüttensandmehl im Bereich >0,009 und <0,069 liegt und die Summe der Mischungspartner jeweils auf 100 Gew.-% abgestellt ist, die Calciumsulfat-Alphahalbhydrat < 35 Gew.-% enthält.

## Beschreibung

Die Erfindung betrifft ein hydraulisches Bindemittel für Mörtel und Betone aus einer pulverförmigen Mischung von Calciumsulfat-Alphahalbhydrat und Hüttensandmehl.

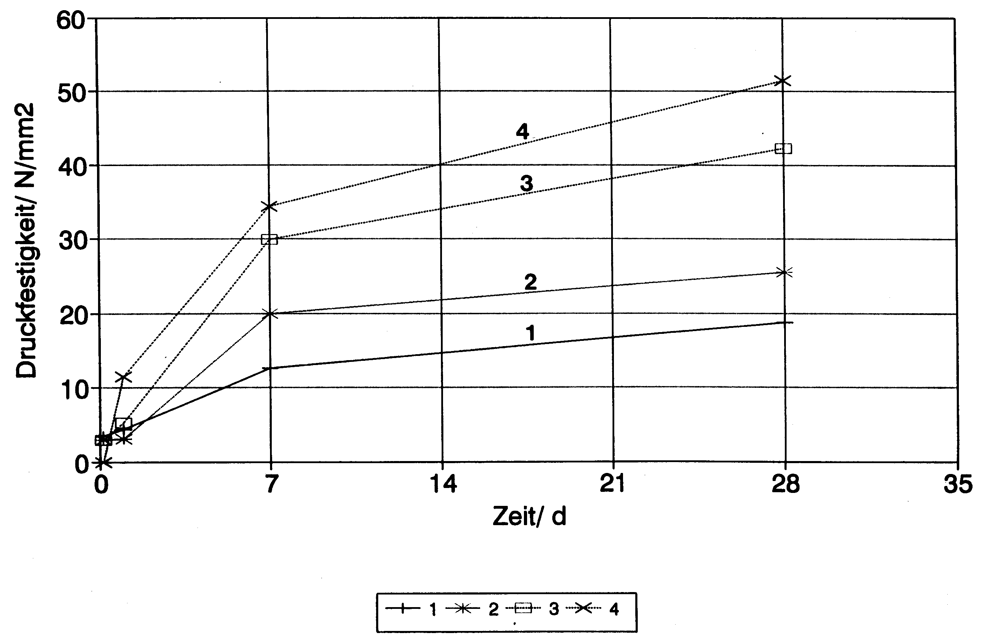

Ein bekanntes hydraulisches Bindemittel ist Portlandzement, der einen Baustoff mit hoher Endfestigkeit liefert, der aber nur langsam erstarrt und demzufolge keine Frühfestigkeit im Bereich von 2 bis 5 h entwickelt. Den zeitlichen Verlauf der Entwicklung der Druckfestigkeit zeigt beispielhaft die Kurve 4 der beigefügten Abbildung. Diese geringe Frühfestigkeit ist nachteilig, weil sie lange Ausschalzeiten bedingt. Zudem bedarf hier das Schwindverhalten einer Verbesserung.

Bekannt sind weiterhin hydraulische Bindemittel aus Calciumsulfat-Alphahalbhydrat und Hüttensandmehl, die nach dem Anmachen mit Wasser schnell erstarren und dadurch hohe Frühfestigkeiten liefern. Die Endfestigkeiten entwickeln sich auch bei langandauernder Unterwasserlagerung. Im Gegensatz zu Portlandzement sind die Endfestigkeiten aber deutlich geringer, und die aus dem Bindemittel hergestellten Baustoffe zeigen eine stärkere Karbonatisierung der Oberfläche. Den zeitlichen Verlauf der Entwicklung der Druckfestigkeit zeigt beispielhaft die Kurve 1 der beigefügten Abbildung.

Mittels Beimischungen von Hilfsstoffen, wie insbesondere Anteilen von Portlandzementklinker bzw. Portlandzement, ist versucht worden, die Oberflächenbeschaffenheit zu verbessern und die Endfestigkeit zu steigern. Die Endfestigkeiten portlandzementgebundener Baustoffe konnte auch hier nicht erreicht werden. Den zeitlichen Verlauf der Entwicklung der Druckfestigkeit zeigt beispielhaft die Kurve 2 der beigefügten Abbildung.

Aufgabe der Erfindung ist es daher, ein schnellerstarrendes Bindemittel für Mörtel und Betone der eingangs genannten Art zu schaffen, das sowohl hohe Früh- als auch Endfestigkeit entwickelt.

Diese Aufgabe wird dadurch gelöst, daß die Mischung 20 bis 40 Massenteile Calciumsulfat-Alphahalbhydrat, 80 bis 60 Massenteile Hüttensandmehl, 0,35 bis 3,5 Massenteile Tonerdezement und 0,2 bis 2 Massenteile Kalkhydrat enthält, wobei der Quotient der enthaltenen Massenteile von Tonerdezement und Kalkhydrat zu Hüttensandmehl im Bereich >0,009 und <0,069 liegt und die Summe der Mischungspartner jeweils auf 100 Gew.-% abgestellt ist, die Calciumsulfat-Alphahalbhydrat < 35 Gew.-% enthält.

Als Komponenten können gemischt werden 20 bis 40 Massenteile Calciumsulfat-Alphahalbhydrat mit einer Mahlfeinheit von 1500 bis 4500 cm²/g, insbesondere 2500 bis 3500 cm²/g (spezifische Oberfläche nach Blaine), 80 bis 60 Massenteile Hüttensandmehl mit einer Mahlfeinheit von 3000 bis 6000 cm²/g, insbesondere 4000 bis 5000 cm²/g (spezifische Oberfläche nach Blaine), 0,35 bis 3,5 Massenteile, insbesondere 0,8 bis 2,5 Massenteile, Tonerdezement mit einer Mahlfeinheit von 2500 bis 5000 cm²-g (spezifische Oberfläche nach Blaine) und 0,2 bis 2 Massenteile, insbesondere 0,3 bis 1,5 Massenteile feinteiliges Kalkhydrat. Die Summe der Mischungspartner ist jeweils auf 100 Gew.-% abgestellt, wobei die Summe Calciumsulfat-Alphahalbhydrat < 35 Gew.-% enthält.

Der Anteil von Kalkhydrat und Tonerdezement in bezug auf den Anteil an Hüttensandmehl ist dabei so gewählt, daß der Quotient der enthaltenen Massenteile von Tonerdezement und Kalkhydrat zu Hüttensandmehl im Bereich >0,009 und <0,069, insbesondere >0,018 und <0,05, liegt. Dabei enthält das Bindemittel stets mehr Massenanteile an Tonerdezement als an Kalkhydrat. Insbesondere beträgt das Verhältnis Tonerdezement/Kalkhydrat mindestens 1,5:1, bevorzugt 2:1.

Hierdurch wird ein Bindemittel geschaffen, das nach dem Anmachen mit Wasser schnell erstarrt und genauso hohe Frühfestigkeiten wie bisher bekannte Calcium-Alphahalbhydrat/Hüttensandmehl-Gemische entwickelt.

Überraschenderweise werden gleichzeitig hervorragende Endfestigkeiten erreicht, die mit denen von portlandzementgebundenen Baustoffen vergleichbar sind. Den zeitlichen Verlauf der Entwicklung der Druckfestigkeit zeigt beispielhaft die Kurve 3 der beigefügten Abbildung. Die bessere Raumbeständigkeit der Calcium-Alphahalbhydrat/Hüttensandmehl-Gemische gegenüber Portlandzement bleibt dabei erhalten.

Das erhaltene Bindemittel ermöglicht es zudem, trotz der nur noch erhältlichen, relativ schlechten Hüttensandqualitäten mit etwa 12 Gew.-% Al₂O₃ hohe Festigkeiten zu erzielen.

Die Massenanteile an Tonerdezement und Kalkhydrat bilden aufeinander abgestimmte Reaktionspartner in der Weise, daß das Kalkhydrat nach Art eines Starters das Hüttensandmehl aktiviert und danach durch das Vorhandensein von Tonerdezement mit dem zuvor nach dem Anmachen mit Wasser gebildeten Calciumsulfat-Dihydrat bzw. noch vorhandenem -Halbhydrat zur Bildung von Ettringit beiträgt und damit verbraucht wird. Hierdurch ist es gelungen, Kalkhydrat nur anfänglich als Anreger zur Verfügung zu stellen. Zusammen mit Tonerdezement wird vermieden, daß Kalkhydrat länger zur Verfügung steht oder wie bei der Anregung mit Portlandzement kontinuierlich nachgeliefert wird und die dadurch bewirkten, bekannten Nachteile durch veränderte weitere Ettringitbildung vermieden werden. Darüber hinaus läuft die Hydratation des Hüttensandmehls zu Calciumhydrosilikatphasen (C-S-H Phasen) ungestörter und vollständiger ab.

Dabei können die für die Herstellung des Baustoffs notwendigen Hydratationsgeschwindigkeiten durch die Mahlfeinheiten gemäß Anspruch 2 optimal gewählt werden.

Das zugemischte Hüttensandmehl besitzt vorzugsweise eine höhere Reaktivität, insbesondere einen Basengrad (CaO+MgO+Al₂O₃)/SiO₂ > 1,1.

Der Tonerdezement ist ein Tonerdeschmelz- oder Tonerdesinterzement mit einem Al₂O₃-Gehalt von 30 bis 70 Gew.-%, insbesondere ein Tonerdeschmelzzement mit einem Al₂O₃-Gehalt von 35 bis 45 Gew.-%.

Die bevorzugten Dosierungen und Verhältnisse der Massenanteile von Tonerdezement und Kalkhydrat gemäß der Ansprüche 5 bis 8 liefern einerseits eine höhere Wasserbeständigkeit und andererseits eine solche Ettringitgefügeausbildung, die eine noch weniger gestörte Kristallisation der die Endfestigkeiten liefernden C-S-H Phasen ermöglicht. Vorzugsweise ist dabei das Verhältnis der Massenteile Tonerdezement/Kalkhydrat etwa 2:1, um eine vollständige Bindung des Kalkhydrats bei der frühen Ettringitbildung sicherzustellen.

Zur Anpassung des Bindemittels an den Anwendungszweck können Zusatzmittel zugemischt werden.

Das Anwendungsgebiet des Bindmittels auf der Basis von Calciumsulfat-Alphahalbhydrat und Hüttensandmehl erweitert sich hier auf den Anwendungsbereich von portlandzementgebundenen Baustoffen, soweit kein Korrosionsschutz für eine eventuell vorhandene Bewehrung erforderlich ist. Dabei wirkt sich vorteilhaft aus, daß das Bindemittel als trockene oder pastöse Fertigmischung zur Verfügung gestellt werden kann.

Das Bindemittel kann ferner zur weiteren Festigkeitssteigerung Calciumhydrogenphosphat in einer Menge von 0,1 bis 10 Gew.-% des gesamten Bindemittels enthalten.

Die Mischung kann Zusatzmittel, insbesondere Erstarrungsregulatoren (z.B. Zitronensäureanhydrid oder -monohydrat), Stabilisatoren und/oder Verflüssiger enthalten.

Das vorstehend beschriebene Bindemittel wird mit Wasser und gegebenenfalls Zuschlag gemischt, wobei folgende verfestigende Reaktionen eintreten.

In einer ersten Phase tritt eine Schnellerhärtung durch Bildung von Calciumsulfat-Dihydrat (Gips) ein. Kalkhydrat Ca(OH)₂ geht in Lösung und regt das Hüttensandmehl zur Hydratation an. Das Calciumaluminat des Tonerdezementes setzt sich mit Gips bzw. noch vorhandenem Alphahalbhydrat und Kalkhydrat zu Ettringit um. Das geschieht in ein oder zwei Tagen. In einer zweiten Phase reagiert das Hüttensandmehl zu C-S-H Phasen.

### Beispiel

Aus Calciumsulfat-Alphahalbhydrat mit einer Mahlfeinheit von 3200 cm²/g, Hüttensandmehl einer Mahlfeinheit von 4200 cm²/g, Tonerdeschmelzzement einer Mahlfeinheit 3100 cm²/g und feinteiligem Weißkalkhydrat nach DIN 1060 wurden Mörtelmischungen hergestellt, und zwar mit folgenden Mischungsverhältnissen:

Mischung 1: 30 Gew.-% Calciumsulfat-Alphahalbhydrat, 68,5 Gew.-% Hüttensandmehl, 1 Gew.-% Tonerdeschmelzzement und 0,5 Gew.-% Weißkalkhydrat.

Mischung 2: 32,4 Gew.-% Calciumsulfat-Alphahalbhydrat, 64,9 Gew.-% Hüttensandmehl, 2,2 Gew.-% Tonerdeschmelzzement und 0,5 Gew.-% Weißkalkhydrat.

Den Mischungen wurden 0,02 Gewichtsteile Zitronensäuremonohydrat additiv zugesetzt.

Die Mischungen wurden mit einem Wasser-Bindemittelverhältnis von 0,5 zu Normmörteln (DIN EN 196) verarbeitet. Aus den Normmörteln wurden Prüfkörper der Abmessungen 160mmX40mmX40mm hergestellt. Die Prüfkörper wurden nach 24 Stunden entformt und geprüft oder unmittelbar nach dem Entformen bis zum Prüftermin unter Wasser gelagert. Zur Bestimmung von Druckfestigkeiten nach weniger als 24 Stunden wurden die Prüfkörper unmittelbar vor der Prüfung entformt.

Die zeitliche Entwicklung der Druckfestigkeit der Mischung 1) zeigt Kurve 3 des Diagramms in der beigefügten Abbildung. Auf der Abszissenachse des Diagramms ist die Zeit in Tagen (d), auf der Ordinatenachse die Druckfestigkeit in N/mm² aufgetragen.

Man erkennt, daß die Kurve 3 ab etwa Tag 1 einen der Kurve 4 (Portlandzement) stark angenäherten Verlauf der Entwicklung der Druckfestigkeit zeigt, während Kurve 1 (Calciumsulfat-Alphahalbhydrat/Hüttensandmehl-Gemisch) und Kurve 2 (Calciumsulfat-Alphahalbhydrat/Hüttensandmehl-Gemisch mit Portlandzement als Anreger) bis zu 7 Tagen einen deutlich flacheren Anstieg der Entwicklung der Druckfestigkeit zeigen. Die 28 Tage-Druckfestigkeit des Mörtels unter Verwendung des erfindungsgemäßen Bindemittels ist sprunghaft erhöht gegenüber den bisher bekannten Calciumsulfat-Alphahalbhydrat/Hüttensandmehl-Gemischen mit und ohne Portlandzementanteilen.

Was die Frühfestigkeit anbetrifft, so ist die erste Druckfestigkeit nach 4 Stunden eingetragen. Dazu ist dem Diagramm folgendes zu entnehmen. Die Calciumsulfat-Alphahalbhydrat/Hüttensandmehl-Mischungen (Kurven 1, 2, 3) besitzen Druckfestigkeiten von ca. 3 N/mm². Portlandzement (Kurve 4) war nicht bestimmbar und ist mit 0 N/mm² eingetragen.

## Patentansprüche

1. Bindemittel für Mörtel und Betone, aus einer pulverförmigen Mischung von Calciumsulfat-Alphahalbhydrat und Hüttensandmehl, dadurch **gekennzeichnet**, daß die Mischung 20 bis 40 Massenteile Calciumsulfat-Alphahalbhydrat, 80 bis 60 Massenteile Hüttensandmehl, 0,35 bis 3,5 Massenteile Tonerdezement und 0,2 bis 2 Massenteile Kalkhydrat enthält, wobei der Quotient der enthaltenen Massenteile von Tonerdezement und Kalkhydrat zu Hüttensandmehl im Bereich >0,009 und <0,069 liegt und die Summe der Mischungspartner jeweils auf 100 Gew.-% abgestellt ist, die Calciumsulfat-Alphahalbhydrat < 35 Gew.-% enthält.

2. Bindemittel nach Anspruch 1, dadurch gekennzeichnet, daß das Calciumsulfat-Alphahalbhydrat mit einer Mahlfeinheit von 1500 bis 4500 cm²/g, insbesondere 2500 bis 3500 cm²/g (spezifische Oberfläche nach Blaine), das Hüttensandmehl mit einer Mahlfeinheit von 3000 bis 6000 cm²/g, insbesondere 4000 bis 5000 cm²/g (spezifische Oberfläche nach Blaine) und der Tonerdezement mit einer Mahlfeinheit von 2500 bis 5000 cm²/g (spezifische Oberfläche nach Blaine) enthalten sind.

3. Bindemittel nach Anspruch 1 oder 2, dadurch gekennzeichnet, daß das Hüttensandmehl einen Basengrad (CaO + MgO + Al₂O₃)/SiO₂ > 1,1 aufweist.

4. Bindemittel nach einem der Ansprüche 1 bis 3, dadurch gekennzeichnet, daß der Tonerdezement ein Tonerdeschmelz- oder Tonerdesinterzement mit einem Al₂O₃-Gehalt von 30 bis 70 Gew.-%, insbesondere ein Tonerdeschmelzzement mit einem Al₂O₃-Gehalt von 35 bis 45 Gew.-%, ist.

5. Bindemittel nach einem der Ansprüche 1 bis 4, dadurch gekennzeichnet, daß der Tonerdezement mit einem Mischungsanteil von 0,8 bis 2,5 Massenteile enthalten ist.

6. Bindemittel nach einem der Ansprüche 1 bis 5, dadurch gekennzeichnet, daß das Kalkhydrat feinteilig und mit einem Mischungsanteil von 0,3 bis 1,5 Massenteile enthalten ist.

7. Bindemittel nach einem der Ansprüche 1 bis 6, dadurch gekennzeichnet, daß der Quotient der enthaltenen Massenteile von Tonerdezement und Kalkhydrat zu Hüttensandmehl im Bereich >0,018 und <0,05 liegt.

8. Bindemittel nach einem der Ansprüche 1 bis 7, dadurch gekennzeichnet, daß mehr Massenanteile an Tonerdezement als an Kalkhydrat enthalten sind, insbesondere das Verhältnis Tonerdezement/Kalkhydrat mindestens 1,5:1, bevorzugt 2:1, beträgt.

9. Bindemittel nach einem der Ansprüche 1 bis 8, dadurch gekennzeichnet, daß die Mischung Zusatzmittel, insbesondere Erstarrungsregulatoren, Stabilisatoren, Verflüssiger, enthält.

10. Bindemittel nach einem der Ansprüche 1 bis 9, dadurch gekennzeichnet, daß Calciumhydrogenphosphat in einer Menge von 0,1 bis 10 Gew.-% bezogen auf das gesamte Bindemittel enthalten ist.

11. Bindemittels nach einem der Ansprüche 1 bis 10, dadurch gekennzeichnet, daß es als trockene oder pastöse Fertigmischung vorgemischt ist.
